# EUROPÄISCHE PATENTANMELDUNG

(11) **EP 1 226 859 A1**
(43) Veröffentlichungstag der Anmeldung: **31.07.2002**
(21) Anmeldenummer: 02001585.5
(22) Anmeldetag: 23.01.2002
(51) Int. Cl.: B01D 46/10

(54) **Filterzelle zur Gasreinigung**

(30) Priorität: 24.01.2001 DE 10103181; 24.01.2001 DE 10103180
(71) Anmelder: MCLeodRussel GmbH & Co. OHG, 45549 Sprockhövel (DE)
(72) Erfinder: Czempisz, Jörg, Dipl.-Ing., 47906 Kempen (DE); Trouwain, Thomas, 41334 Nettetal (DE)
(74) Vertreter: Patentanwälte Ostriga & Sonnet

(57) **Zusammenfassung**

Beschrieben und dargestellt ist eine Filterzelle (10) zur Luft- und Gasreinigung mit einem Filter (11), insbesondere mit einem Filter im wesentlichen plattenförmiger Grundform, aus einem Filtermaterial wie Glasfaservlies od. dgl., und mit einem Rahmen (15), der das Filter (11) in Umfangsrichtung (U), insbesondere entlang dessen Schmalseiten (13a, 13b, 13c, 13d), umgibt. Die Besonderheit besteht darin, daß der Rahmen (15) mehrere profilartig, langgestreckt ausgebildete und aus Kunststoff bestehende Abschnittselemente (16) umfasst, die im wesentlichen eine der jeweiligen Seitenlänge (a) des Filters (11) entsprechende Länge (L) aufweisen, und die mittels gesonderter Verbindungselemente (17) miteinander verbindbar sind.

## Beschreibung

Die Erfindung betrifft eine Filterzelle gemäß dem Oberbegriff des Anspruches 1.

Derartige Filterzellen sind bekannt und weit verbreitet. Üblicherweise weisen Filterzellen einen umlaufenden Rahmen aus Pappe oder Karton auf, der mit dem Filter verklebt ist. Eine derartige Klebung ist notwendig, um den lediglich entlang von Rilllinien gebogenen und unter Rückstellkräften stehenden Papprahmen in Form zu halten, so daß z.B. ein im wesentlichen U-förmiges, umlaufendes Profil gebildet wird, das das Filter randseitig umgreift. Außerdem wird durch die Klebung die Eigensteifigkeit der Filterzelle erzielt.

Derzeit beträgt der Marktanteil der kommerziell erhältlichen Filterzellen mit einem umlaufenden Rahmen aus Pappe oder Karton über 90 %. Die übrigen Filterzellen weisen einen Rahmen aus Metall oder Holz auf, wobei es sich hierbei im wesentlichen um Spezialanfertigungen geringer Stückzahlen handelt.

Die bekannte Filterzelle ist ein Massenprodukt, welches in Industrieanlagen aber beispielsweise auch Verwaltungsbauten oder Krankenhäusern in Klima- oder Lüftungsanlagen zum Einsatz kommt. Nach festgelegten Standzeiten, die von dem Grad der Filterverschmutzung abhängen, wird die gesamte Filterzelle ausgewechselt. Üblicherweise wird die formstabile Filterzelle mit ihrem Rahmen insgesamt in eine einsatzortfeste Aufnahmeöffnung eingesetzt, wo sie mittels Klammerelementen gehalten ist und für einen Austausch leicht entnommen werden kann.

Im Bereich des Filters können entsprechende Zugschlaufen für ein leichtes Herausziehen der Filterzelle aus der vorgesehenen Aufnahmeöffnung angeordnet sein.

Die Aufgabe der Erfindung besteht darin, ausgehend von der eingangs geschilderten Filterzelle mit einem Papprahmen eine Filterzelle zu schaffen, die hinsichtlich Konstruktion und Herstellung vereinfacht ist.

Die Erfindung löst diese Aufgabe mit den Merkmalen des Anspruches 1, insbesondere mit denen des Kennzeichenteils und ist demgemäß dadurch gekennzeichnet, daß der Rahmen mehrere profilartig, langgestreckt ausgebildete und aus Kunststoff bestehende Abschnittselemente umfaßt, die eine im wesentlichen der Seitenlänge des Filters entsprechende Länge aufweisen und die mittels gesonderter Verbindungselemente miteinander verbindbar sind.

Das Prinzip der Erfindung besteht somit zunächst im wesentlichen darin, an Stelle der im Stand der Technik bekannten Rahmen aus Pappe oder Karton nunmehr Kunststoff zu verwenden, wodurch grundsätzlich eine kleberlose Verbindung zwischen dem Filter und dem Rahmen ermöglicht wird. Der Rahmen kann nämlich nunmehr bereits bei seiner Herstellung derart ausgebildet sein, daß er Halteflächen besitzt, die entsprechende Flächenabschnitte des Filters, insbesondere, wenn das Filter als plattenförmiger Kompakt- bzw. Kassettenfilter ausgebildet ist, umgreifen und das Filter somit formschlüssig an dem Rahmen halten.

Darüber hinaus besteht nunmehr die Möglichkeit, die Abschnittselemente zu extrudieren, und auf diese Weise einen sehr preiswerten, sehr einfachen und in der Herstellung vorteilhaften Rahmen zur Verfügung zu stellen, welcher darüber hinaus selbst, ohne die Notwendigkeit einer Klebung, formbeständig ist. Insbesondere können im wesentlichen identische Abschnittselemente zum Zusammenbau eines Rahmens verwendet werden, die durch Ablängen eines kontinuierlich produzierten Extruderprofils hergestellt werden.

Zur Verbindung derartiger extrudierter Abschnittselemente miteinander sind erfindungsgemäß gesonderte Verbindungselemente vorgesehen, die insbesondere nach Art von Eckverbindern die Eckbereiche des Rahmens ausbilden und jeweils zwei Abschnittselemente unter einem rechten Winkel aneinander halten, wobei selbstverständlich auch andere Winkel - je nach Grundform des Filters - möglich sind. Insbesondere bietet sich auf diese Weise die Möglichkeit einer steckbaren Ausbildung des Rahmens, so daß dieser zusammensteckbar und wieder zerlegbar ist. Dies bietet grundsätzlich die Möglichkeit getrennter Entsorgung von Filter und Rahmen nach Gebrauch.

Da darüber hinaus grundsätzlich auch eine kleberlose Befestigung des Filters an dem Rahmen möglich wird, können benutzte Filterzellen nach Gebrauch nunmehr auch insgesamt auf einfache Weise entsorgt werden, da diese vollständig veraschbar sind und auf Grund der Kleberlosigkeit eine besondere Schadstoffklassifizierung, etwa als Sondermüll, entfällt.

Eine kleberlose Filterzelle ist darüber hinaus viel preiswerter als eine herkömmliche Filterzelle, da Klebstoff ein nicht zu unterschätzender Kostenfaktor ist.

Die kleberlose Ausbildung der Filterzelle bietet darüber hinaus besondere Vorteile hinsichtlich der hygienischen Anforderungen. Zunächst weist Kunststoff im Vergleich zu den herkömmlichen Pappe- bzw. Kartonrahmen eine stark verringerte Schimmelbildung sowie eine verringerte Neigung zur Ansammlung von Bakterien etc. auf. Darüber hinaus bildet Klebstoff jedoch bei bekannten Filterrahmen oft ein Milieu, in dem es sehr schnell und häufig zu ungewünschten mikrobiologischen Entwicklungen, insbesondere zur Ansammlung von Bakterien kommt. Bei einer kleberlosen Ausgestaltung des Rahmens entfällt dieser Herd.

Die erfindungsgemäße Filterzelle weist darüber hinaus den Vorteil auf, daß die bei einer Filterzelle des Standes der Technik mit Papprahmen nicht zu vermeidende Wasseraufnahme des Rahmens auf Grund hoher Luftfeuchtigkeit ausbleibt. Auch dies vermindert somit beispielsweise eine Schimmelbildung. Bei der erfindungsgemäßen Filterzelle hat darüber hinaus eine hohe Luftfeuchtigkeit keinen Einfluß auf die Eigensteifigkeit der Filterzelle. Beim Stand der Technik mit einem Filterrahmen aus Pappe, wurde durch Wasseraufnahme die Eigensteifigkeit der Filterzelle stark vermindert.

Filterzellen des Standes der Technik weisen üblicherweise einen umlaufenden Rahmen aus Pappe oder Karton auf, der mit dem Filter verklebt ist. Der Karton ist dabei beispielsweise ein einteiliger Stanzzuschnitt, der entlang von Rilllinien gebogen wird und ein, z.B. im wesentlichen plattenförmiges Filter umlaufend, randseitig umgreift und mit diesem verklebt wird.

Eine derartige Filterzelle aus Filter und Filterrahmen wird an unterschiedlichen Einsatzorten, beispielsweise in Industrieanlagen, Verwaltungsbauten oder z.B. auch in Krankenhäusern eingesetzt und nach regelmäßigen Standzeiten ausgetauscht. Typische Einsatzorttemperaturen betragen zwischen - 30°C und +90°C.

Zur Montage einer herkömmlichen Filterzelle wird diese insgesamt in eine einsatzortfeste Aufnahmeöffnung eingesetzt. Zur Demontage des erfindungssgemäßen Filterzelle, beispielsweise auch zu Reinigungszwecken, wird diese beispielsweise mittels an dem Filter montierter Zugschlaufen aus der Aufnahmeöffnung herausgezogen.

Aus der DE 200 10 383 U1 ist eine Filteranordnung bekannt, deren Rahmen aus Polypropylen besteht. Hinsichtlich besonderer Materialeigenschaften dieses Kunststoffes wird keine Aussage getroffen.

Bei einer erfindungsgemäßen Filterzelle kann eine Verbesserung gegenüber dem geschilderten Stand der Technik dadurch erreicht werden, daß der Rahmen zumindest teilweise aus einem Kunststoff besteht, der eine Dichte im Bereich zwischen 1,03 bis 1,07 g/cm³, ein Elastizitätsmodul im Bereich zwischen 2000 bis 3000 MPa aufweist und eine Kerbschlagzähigkeit (Charpy) von etwa 5 - 15 kJ/m² bei -40°C aufweist.

Somit wird vorgeschlagen, an Stelle des im Stand der Technik bekannten Papp- oder Kartonrahmens nunmehr einen Kunststoffrahmen vorzusehen, der besondere Materialeigenschaften aufweist.

Aufwendige Versuche, insbesondere Fallversuche bei unterschiedlichen Temperaturen haben ergeben, daß ein Kunststoff mit den oben geschilderten Eigenschaften über einen großen Temperaturbereich, insbesondere bei geringen Temperaturen, also beispielsweise bei -30°C, eine besonders geringe Spannungsrißbildung zeigt. Dies bietet den Vorteil, daß ein Niederfallen der Filterzelle auf den Boden geringere Gefahren hinsichtlich einer Zerstörung des Rahmens bzw. der Filterzelle mit sich bringt. Hierzu ist zu sagen, daß ein Montieren oder Demontieren der Filterzelle, die beispielsweise an schwierig zugänglichen Einsatzorten montiert ist, teilweise mühselig sein kann und die Filterzelle auf Grund unsachgemäßer Handhabung auch aus großen Höhen auf den Boden niederfallen kann, was beim Stand der Technik in einigen Fällen zu Zerstörungen des Rahmens führt.

Darüber hinaus kann eine unsachgemäße Handhabung der Filterzelle des Standes der Technik, auch bei einem Auswechselvorgang zu Reinigungszwecken, insofern Probleme bereiten, als daß an Stelle eines ordnungsgemäßen Herausziehens der Filterzelle an den dafür vorgesehenen Zugschlaufen ein härterer, auch ein metallischer Gegenstand, wie z.B. ein Schraubendreher, an dem Filterrahmen angesetzt wird, und mit Hilfe des Schraubendrehers die Filterzelle aus der Einsatzöffnung herausgehebelt wird. Beim Stand der Technik kann dieses Ansetzen des Schraubendrehers an Randbereichen des Filterrahmens zu einer Zerstörung des Rahmens führen.

Die erfindungsgemäße Filterzelle weist, insbesondere bei tiefen Temperaturen, bei denen die Gefahr der Spannungsrißbildung beim Stand der Technik besonders groß war, eine stark verringerte Neigung zur Spannungsrißbildung auf, so daß eine neue, einzusetzende Filterzelle mit einer größeren Wahrscheinlichkeit einen Fall auch aus größerer Höhe schadlos überstehen kann.

Darüber hinaus bietet der mit seinen physikalischen Eigenschaften beschriebene Kunststoff die Möglichkeit einer besonders guten Extrudierbarkeit, was den Herstellungsprozeß vereinfacht und die erfindungsgemäße Filterzelle preiswert herstellbar ausbildet. Insbesondere für den Fall, daß ein Rahmen aus mehreren Abschnittselementen bestehen soll, die miteinander zusammensteckbar sind, kann auf diese Weise eine erfindungsgemäße Filterzelle besonders preiswert hergestellt werden.

Die erfindungsgemäße Filterzelle kann aus einem Kunststoff hergestellt werden, der preiswert ist und als Massenprodukt kommerziell erhältlich ist. Beispielsweise wird ein derartiger Kunststoff von der A.Schulman GmbH, 50170 Kerpen, unter der Marke Polyman und der Produktbezeichnung LP 129/2 GL angeboten.

Alternativ kann beispielsweise auch von der Bayer AG ein Kunststoff, der unter dem Handelsnamen Novodur P2H-AT erhältlich ist, verwendet werden. Schließlich sei noch auf einen Kunststoff hingewiesen, der unter dem Begriff "Kantenband aus ABS" von der Doellken-Kunststoffverarbeitung GmbH, 45964 Gladbeck, bezogen werden kann.

Insbesondere ABS-Kunststoffe, also Acrylnitril-Butadien-Styrol-Polymerisate erfüllen die geforderten Anforderungen.

Eine erfindungsgemäße Filterzelle weist darüber hinaus eine auch gegenüber der Filterzelle gemäß DE 200 100 383 U1 stark verringerte Neigung zur Spannungsrißbildung über den Temperaturbereich von -30°C bis +90°C, insbesondere bei tiefen Temperaturen, auf.

Ein weiterer Vorteil des für die erfindungsgemäße Filterzelle vorteilhafterweise verwendeten Kunststoffes ist die Tatsache, daß bei verhältnismäßig geringem Gewicht des bei großen Filterzellen materialintensiven Filterrahmens eine Formbeständigkeit erreicht wird, die eine kleberlose Ausbildung der Filterzelle ermöglicht. Außerdem wird ein einfaches Zusammenstecken von Rahmenteilen, insbesondere auch unter Erreichung einer stabilen und einfachen Presspassung unter Verwendung eines solchen Kunststoffes ermöglicht.

Der erfindungsgemäße Kunststoff besitzt darüber hinaus eine hohe, gute Beständigkeit gegen den Befall durch Mikroorganismen. Insbesondere eine bei dem herkömmlichen Papprahmen anzutreffende Schimmelbildung sowie Förderung von einer Ansammlung von Bakterien findet bei einem aus dem erfindungsgemäßen Kunststoff bestehenden Rahmen nicht statt.

Außerdem verhindert der erfindungsgemäße Kunststoff jegliche Feuchtigkeitsaufnahme, so daß die Eigensteifigkeit einer erfindungsgemäßen Filterzelle auch bei hoher Luftfeuchtigkeit in keiner Weise beeinflußt wird.

Gemäß einer vorteilhaften Ausgestaltung der Erfindung weist der Kunststoff eine Reißdehnung von etwa 20 % gemäß DIN 53455 auf. Diese Ausführungsform bietet den Vorteil einer besonders geringen Neigung zur Spannungsrißbildung über den gesamten Temperaturbereich von -30°C bis +90°C, insbesondere bei tiefen Temperaturen.

Gemäß einer weiteren vorteilhaften Ausgestaltung der Erfindung weist der Kunststoff eine Zugfestigkeit im Bereich von 40 bis 50 MPa gemäß DIN 53455 auf. Diese Ausführungsform bietet den Vorteil einer besonders geringen Neigung zur Spannungsrißbildung über den gesamten Temperaturbereich von - 30°C bis +90°C, insbesondere bei tiefen Temperaturen.

Gemäß einer weiteren vorteilhaften Ausgestaltung der Erfindung weist der Kunststoff eine Kerbschlagzähigkeit (Charpy) von etwa 18 kJ/m² bei 23°C auf. Dies bietet ebenfalls den Vorteil einer geringen Neigung zur Spannungsrißbildung über einen großen Temperaturbereich, uns zwar auch bei sehr hohen Temperaturen.

Gemäß einer weiteren vorteilhaften Ausgestaltung der Erfindung weist der Kunststoff eine Kerbschlagzähigkeit (Charpy) von etwa 6 bis 10 kJ/m² bei - 40°C auf. Dies bietet insbesondere die Möglichkeit der Verwendung eines Kunststoffes mit einer sehr geringen Neigung zur Spannungsrißbildung bei tiefen Temperaturen.

Gemäß einer weiteren vorteilhaften Ausgestaltung der Erfindung weist der Kunststoff eine Kerbschlagzähigkeit (Charpy) von etwa 8 kJ/m² bei -40°C auf. Dies bietet ebenfalls den Vorteil einer besonders geringen Spannungsrißbildung bei tiefen Temperaturen.

Aus der DE 31 10 131 A1 ist ein nicht gattungsgemäßes Filter zur Luft- und Gasreinigung bekannt, bei dem das Filter mittels im Querschnitt U-förmiger Streifen verstärkt wird, in einem Aufnahmerahmen einsetzbar ist und mit dem Aufnahmerahmen mittels Klebstoff verbunden wird. Die im Querschnitt U-förmigen Streifen können dabei aus Kunststoff bestehen.

Gemäß einer vorteilhaften Ausgestaltung der Erfindung sind die Abschnittselemente extrudiert. Dies bietet die Möglichkeit einer besonders einfachen Herstellung der Abschnittselemente, wobei diese darüber hinaus sehr preiswert möglich ist. Außerdem bietet sich bei dieser Herstellung die Möglichkeit, Hohlkammern in den Abschnittselementen bereits bei der Herstellung der Abschnittselemente vorzusehen, die später als Aufnahmekammern für Steckzungen von Verbindungselementen dienen können, also einen Teil einer Steckverbindung bilden. Zusätzliche Steckverbindungselemente müssen auf diese Art und Weise an den Abschnittselementen nicht mehr angebracht werden.

Gemäß einer weiteren vorteilhaften Ausgestaltung der Erfindung sind die Abschnittselemente lösbar aneinander befestigbar. Dies bietet die Möglichkeit, den Rahmen nach Benutzung der Filterzelle auf einfache Weise zu zerlegen und auf diese Weise wieder zu verwenden oder getrennt von dem Filter zu entsorgen.

Gemäß einer weiteren vorteilhaften Ausgestaltung der Erfindung sind die Abschnittselemente mit den Verbindungselementen zusammensteckbar. Dies bietet die Möglichkeit einer besonders einfachen Montage bzw. Demontage, die beispielsweise von Hand, grundsätzlich aber auch automatisiert, möglich ist.

Gemäß einer weiteren vorteilhaften Ausgestaltung der Erfindung sind die Abschnittselemente im Querschnitt im wesentlichen U-förmig ausgebildet. Dies bietet insbesondere die Möglichkeit, ein Kompakt- bzw. Kassettenfilter, also ein im wesentlichen plattenförmiges Filter, ohne weitere Hilfsmittel, also insbesondere ohne Kleber, an dem Rahmen dauerhaft zu befestigen. Die Seitenschenkel des U-förmigen Profils können dabei insbesondere Halteflächen bereitstellen, die an entsprechenden Flächen des Filters anliegen und dieses an dem Rahmen halten.

Gemäß einer weiteren vorteilhaften Ausgestaltung der Erfindung ist in den Abschnittselementen wenigstens eine Hohlkammer angeordnet. Dies bietet die Möglichkeit auf besonders einfache Weise, nämlich bereits beim Herstellungsprozeß mittels Extrudierung, eine Aufnahmekammer für entsprechende Befestigungselemente der Verbindungselemente vorzusehen, ohne daß weitere zusätzliche Maßnahmen erforderlich wären.

Gemäß einer weiteren vorteilhaften Ausgestaltung der Erfindung weisen die Verbindungselemente Steckzungen auf. Dies bietet insbesondere die Möglichkeit einer besonders einfachen Ausgestaltung der Verbindungselemente. Insbesondere können Aufnahmefächer für die Steckzungen an den Abschnittselementen angeordnet werden, wobei die Aufnahmefächer als Hohlkammern ausgebildet sein können, die bereits beim Herstellungsprozeß durch Extrudierung angeformt werden.

Gemäß einer weiteren vorteilhaften Ausgestaltung der Erfindung ist in den Abschnittselementen eine Mehrzahl von Hohlkammern angeordnet, die voneinander durch Stege getrennt sind. Dies bietet insbesondere die Möglichkeit, für eine Vielzahl von Steckzungen eines Verbindungselementes Aufnahmekammern an den Abschnittselementen vorzusehen, die bei der Extrudierung mit angeformt werden. Gleichzeitig kann eine Vielzahl von Steckzungen und entsprechenden Hohlkammern die Stabilität des Rahmens stark erhöhen.

Gemäß einer weiteren vorteilhaften Ausgestaltung der Erfindung bestehen die Abschnittselemente und/oder die Verbindungselemente aus ABS. Dies hat den Vorteil, daß ein preiswertes Material verwendet wird, das in einem sehr großen Temperaturbereich, der während des Einsatzes der Filterzelle eine Rolle spielt, besondere Materialeigenschaften zeigt. Insbesondere eine sehr geringe Neigung zur Spannungsrißbildung in einem Temperaturbereich zwischen -30°C und +90°C ist dabei hervorzuheben.

Weitere Vorteile ergeben sich aus den nicht zitierten Unteransprüchen sowie an Hand der nun folgenden Beschreibung eines in den Zeichnungen dargestellten Ausführungsbeispiels. Darin zeigen:
- Fig. 1: schematisch in teilgeschnittener Ansicht eine erfindungsgemäße Filterzelle mit Filter und Rahmen,
- Fig. 2: schematisch in teilgeschnittener Ansicht den bezüglich Fig. 1 oberen linken Eckbereich des Rahmens, wobei das Filter der Übersichtlichkeit halber weggelassen ist,
- Fig. 3: ein einzelnes Abschnittselement in Ansicht,
- Fig. 4: in abgebrochener Darstellung das Abschnittselement gemäß Ansichtspfeil IV in Fig. 3,
- Fig. 5: ein einzelnes Verbindungselement in Ansicht, und
- Fig. 6: das Verbindungselement gemäß Ansichtspfeil VI in Fig. 5.

In der nun folgenden Figurenbeschreibung werden gleiche oder vergleichbare Elemente oder Teile mit gleichen Bezugszeichen beziffert.

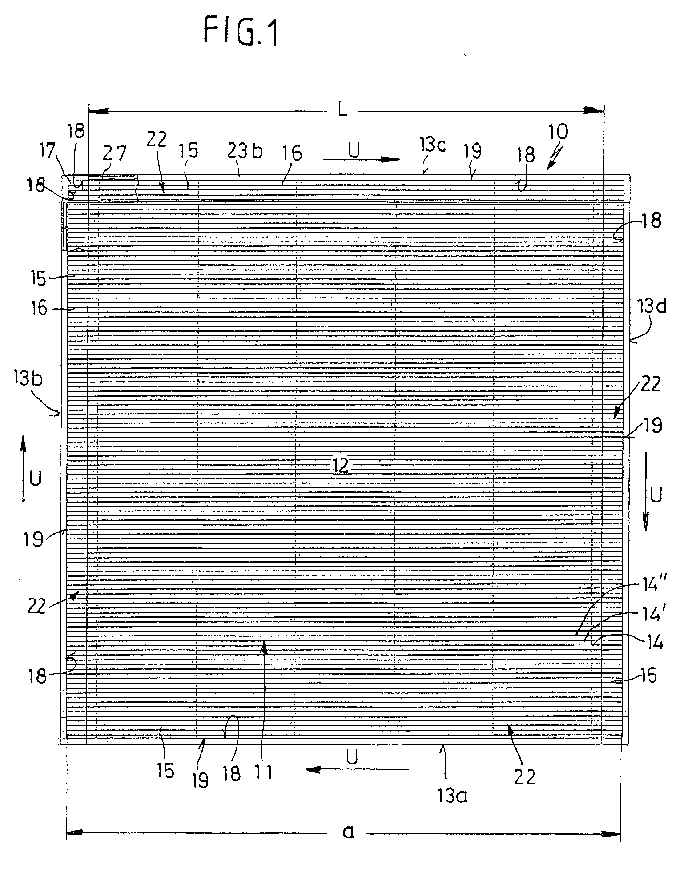

Die in ihrer Gesamtheit mit 10 bezeichnete Filterzelle gemäß Fig. 1 umfaßt zunächst ein Filter 11 und einen das Filter in Umfangsrichtung U umgebenen Rahmen 15. Das Filter 11 weist gemäß Fig. 1 eine im wesentlichen plattenförmige Grundform und einen im wesentlichen quadratischen Querschnitt mit einer Breitseite 12 auf. Die Dicke des Filters 11, also die Erstreckung des Filters 11 entlang einer Richtung senkrecht zur Papierebene der Fig. 1, ist deutlich geringer als die Kantenlänge a der Breitseite 12. Das Filter 11 weist somit vier Schmalseiten 13a, 13b, 13c, 13d auf.

Bei der beschriebenen plattenförmigen Ausbildung des Filters 11 handelt es sich um ein Filter, das als Kompaktfilter bezeichnet wird. Es weist eine Vielzahl von Lagen 14, 14', 14" von plissiertem Material, wie beispielsweise Glasfaservlies, auf. Grundsätzlich kommen als Filtermaterial auch andere Materialien in Betracht.

Ein derartiger als Kompakt- bzw. Kassettenfilter bezeichneter Filter 11 ist weit verbreitet. Im Rahmen der Erfindung können jedoch auch andere Filterarten, beispielsweise Taschenfilter in Betracht kommen.

Der in Fig. 1 angedeutete Rahmen 15 ist geschlossen und in Umfangsrichtung U umlaufend ausgebildet. Mit seiner Innenfläche 18 liegt der umlaufende Rahmen 15 an der Außenfläche 19 des Filters 11 an.

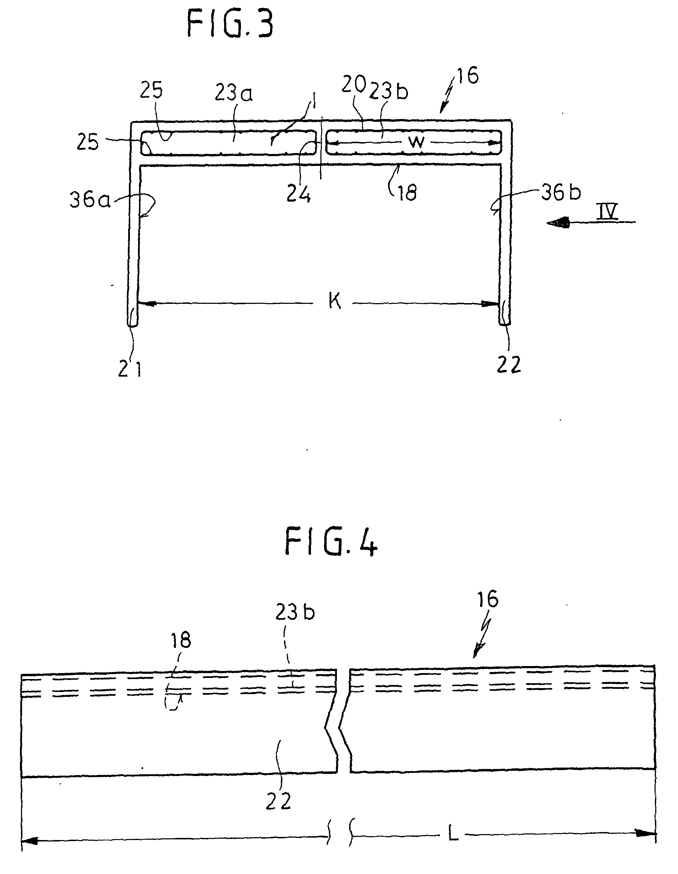

Der Rahmen 15 besteht lediglich aus Abschnittselementen 16 und Verbindungselementen 17. Zunächst wird an Hand der Figuren 3 und 4 beispielhaft ein Abschnittselement 16 des Rahmens 15 beschrieben:
Fig. 3 zeigt ein erfindungsgemäßes Abschnittselement 16 in Ansicht. Es ist im wesentlichen U-förmig ausgebildet, umfaßt somit einen Boden 20 und zwei Seitenwände 21, 22. Der Boden 20 ist doppelwandig ausgebildet, so daß zwei Hohlkammern 23a, 23b entstehen, die voneinander durch einen kleinen Mittelsteg 24 getrennt sind.

In den Innenraum I der Hohlkammern 23a, 23b ragen kleine vorstehende Rippen 25 hinein, auf deren Bedeutung später noch eingegangen wird.

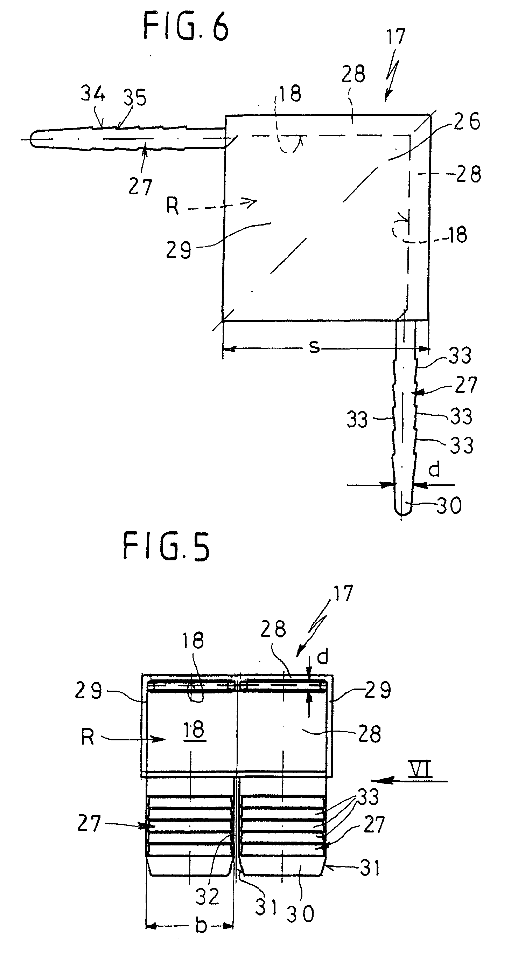

Fig. 6 zeigt ein Verbindungselement 17, welches einen Mittelabschnitt 26 und zwei unter einem rechten Winkel voneinander wegweisende Steckzungen 27 umfaßt, die von dem Mittelabschnitt 26 weg vorstehen. Der Mittelabschnitt 26 weist Bodenwände 28 und Seitenwände 29 auf, so daß ein nach zwei Seiten hin offener Raum entsteht. Dieser halb offene Raum R weist zueinander senkrecht stehende Anlageflächen 18 auf, die im montierten Zustand des Rahmens 15 einen Teil der Innenumfangsfläche des Rahmens ausbilden ebenfalls an der Außenfläche 19 des Filters 11 anliegen.

Von dem Mittelabschnitt 26 des Verbindungselementes 17 erstrecken sich zwei Paare von Steckzungen 27 weg, deren jeweilige Breite b (Fig. 5) im wesentlichen der Breite w (Fig. 3) der Hohlkammer 23 des Abschnittselementes 16 entspricht, wobei die Breite b selbstverständlich geringfügig kleiner ist als die Breite w der Hohlkammer 23, um ein Einstecken der Steckzungen 27 in die Hohlkammern 23 zu ermöglichen. Es sei an dieser Stelle darauf hingewiesen, daß die Zahl der Steckzungen 27 und die Zahl der Hohlkammern 23, 23a, 23b selbstverständlich frei wählbar ist, wobei eine Vielzahl von Steckzungen 27 die Stabilität des Rahmens 15 insgesamt jedoch erhöhen kann. Es hat sich als vorteilhaft herausgestellt, Steckzungen 27 zu verwenden, deren Breite b etwa im Bereich von 20 mm bei einer Dicke d der Steckzunge 27 von ca. 1,8 mm beträgt. Auch hinsichtlich dieser Maße sind selbstverständlich Abweichungen möglich.

Wie sich aus Fig. 5 ergibt, befinden sich im Bereich des freien Endes 30 der jeweiligen Steckzunge 27 Schrägflächen 31, die das Einführen der Steckzungen 27 in die Hohlkammern 23 erleichtern. Selbstverständlich befindet sich jeweils zwischen zwei benachbarten Steckzungen 27 ein Freiraum 32, der beim Einführen der Steckzungen 27 in die Hohlkammern 23 ein Einschieben des Mittelsteges 24 in diesen Freiraum 32 hinein erlaubt.

Wie sich insbesondere aus Fig. 6 deutlich ergibt, weist jede Steckzunge 27 eine Vielzahl von Zähnen 33 auf, die jeweils eine flachere Flanke 34 und eine steilere Flanke 35 aufweisen. Die Zähne 33 wirken bei in die Hohlkammer 23 eingeführtem Zustand mit den Rippen 25 im Innenraum I der Hohlkammer 23 zusammen, derart, daß sich die Rippen 25 beim Einstecken der Steckzungen 27 in die Hohlkammern 23 in das Material der Steckzungen 27 zumindest teilweise einarbeiten, so daß eine verstärkte Presspassung erreicht wird.

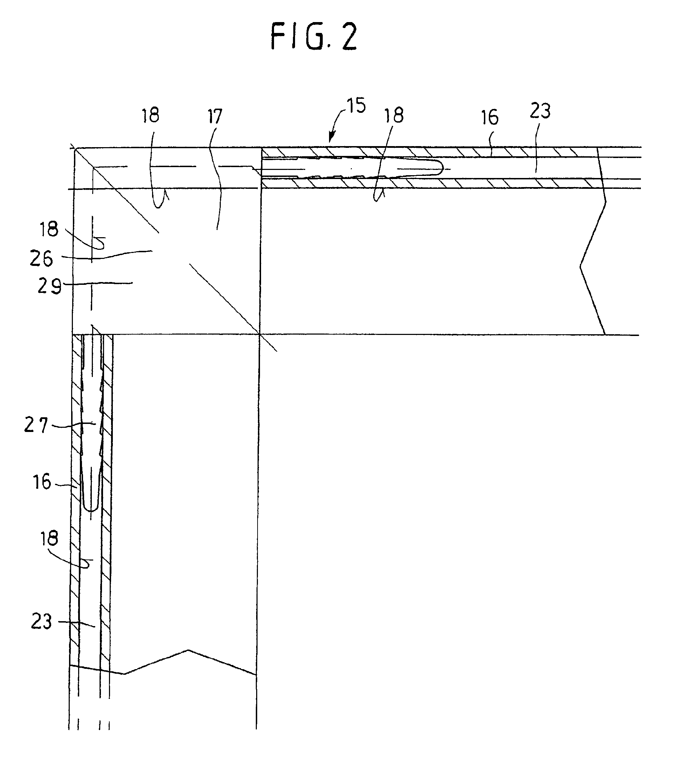

Im zusammengebauten Zustand von Verbindungselementen 17 und Abschnittselementen 16 bildet der Rahmen 15 eine durchgehende, umlaufende Innenfläche 18 aus, an der die Außenfläche 19 des in Fig. 2 nicht dargestellten Filters 11 anliegt.

Auf Grund der Presspassung zwischen Verbindungselement 17 und Abschnittselement 16 entsteht ein formstabiler, ohne weiteres nicht lösbarer und selbsthaltender durchgehender Rahmen 15, der das Filter 11 formschlüssig hält. Insbesondere bei Betrachtung der Fig. 3 wird deutlich, daß das dort nicht dargestellte Filter 11, welches mit seiner Außenfläche 19, die von den Schmalseiten 13a, 13b, 13c, 13d gebildet wird, bei dichter Anlage an der Innenfläche 18 des Bodens 20 des Abschnittselementes 16 von den beiden Seitenwänden 21 und 22 des Abschnittselementes 16 gehalten wird. Die Innenflächen 36a, 36b fungieren insofern als Halteflächen für das Filter 11. Die Breite K des Abschnittselementes 16, also der Abstand zwischen den Innenflächen 36a und 36b der Seitenwände 21, 22, entspricht dabei im wesentlichen der Dicke des Filters 11, also der Erstreckung des Filters 11 entlang einer Richtung senkrecht zur Papierebene der Fig. 1.

Erfindungsgemäß kann ein herkömmliches Filter 11, insbesondere ein Kompakt- bzw. Kassettenfilter, nunmehr von einem Rahmen 15, der von Hand oder auch automatisiert auf einfache Weise zusammengebaut werden kann, umrahmt werden und dauerhaft festgehalten werden, ohne daß die Verwendung eines Klebstoffes notwendig ist. Das in sich im wesentlichen formbeständige Filter 11 wird auf Grund der, wie sich insbesondere aus Fig. 1 ergibt, umlaufenden Seitenwände 21 und 22 des Rahmens 15 davon abgehalten, sich von dem Rahmen 15 zu lösen.

Die von der umlaufenden Seitenwand 22 (Fig. 1) der vier Abschnittselemente 16 eingenommene Fläche ist dabei insgesamt deutlich geringer als die nicht von der Seitenwand 21, 22 abgedeckten Fläche 12 des Filters 11, so daß eine ausreichende Filterleistung, insbesondere ein ausreichender Filterquerschnitt, somit gewährleistet ist. In diesem Zusammenhang wird darauf hingewiesen, daß die Seitenwände 29 des Verbindungselementes 17 ebenfalls dazu beitragen, daß eine im wesentlichen durchgehende, umlaufende, als Haltefläche für das Filter 11 fungierende Fläche 22, 21 vorgesehen ist.

Die Montage des Rahmens 15 um einen Filter 11 herum ist denkbar einfach, und kann zeitsparend ohne besondere Hilfsmittel durch Zusammenstecken vorgenommen werden. Auch eine Demontage des Rahmens 15 kann, falls gewünscht, ohne besondere Hilfsmittel auf besonders einfache Weise vorgenommen werden. In diesem Zusammenhang ist von besonderer Wichtigkeit, daß der Rahmen 15 zerstörungsfrei zerlegbar ist, da die Verbindung zwischen den Verbindungselementen 17 und den Abschnittselementen 16 lediglich eine Presspassung ist.

Verbindungselement 17 und Abschnittselement 16 bestehen vorzugsweise aus ABS (Acrylnitril-Butadien-Styrol-Polymerisat). Dieser Werkstoff kann z.B. unter der Marke Polynam unter der Titelbezeichnung LP 129/2 GL von der A. Schulman GmbH, 50170 Kerpen bezogen werden.

Hinsichtlich des zu verwendenden Werkstoffes wird allgemein auf solche Kunststoffe hingewiesen, die in der deutschen Patentanmeldung (Aktenzeichen DE 101 03 180) der Anmelderin beschrieben sind. Der Inhalt dieser Patentanmeldung wird hiermit in den Inhalt der vorliegenden Patentanmeldung eingeschlossen. So ist vorteilhafterweise vorgesehen, daß der Rahmen zumindest teilweise aus einem Kunststoff besteht, der eine Dichte im Bereich zwischen 1,03 -1,07 g/cm³, ein Elastizitätsmodul im Bereich zwischen 2000 - 3000 MPa, und eine Kerbschlagzähigkeit (Charpy) von etwa 5 - 15 kJ/m² bei - 40°C aufweist.

In einer weiteren vorteilhaften Ausgestaltung ist vorgesehen, daß der Kunststoff eine Dichte im Bereich zwischen 1,05 - 1,06 g/cm³ aufweist

Vorteilhafterweise kann auch vorgesehen sein, daß der Kunststoff ein Elastizitätsmodul von etwa 2100 Mpa aufweist.

In einer besonderen Ausgestaltung der Erfindung weist der Kunststoff eine Streckspannung im Bereich von 30 bis 65 Mpa auf.

Eine weitere vorteilhafte Ausgestaltung der Erfindung kann auch sein, daß der Kunststoff eine Streckdehnung im Bereich von 2 bis 3 % aufweist.

Insbesondere ist vorgesehen, daß der Kunststoff eine Streckdehnung von etwa 2,1 % aufweist.

Eine besondere Ausgestaltung der Erfindung kann auch sein, daß der Kunststoff eine nominelle Bruchdehnung im Bereich von 15 bis 30 % aufweist.

Besonders vorteilhaft kann auch sein, daß der Kunststoff eine Reißdehnung von etwa 20 % gemäß DIN 53455 aufweist.

Es kann auch vorteilhafterweise vorgesehen sein, daß der Kunststoff eine Formbeständigkeitstemperatur HDT von 90 bis 110°C aufweist.

Eine weitere besondere Ausgestaltung der Erfindung besteht darin, daß der Kunststoff eine VICAT-Erweichungstemperatur von etwa 96 °C (50 N (B)) gemäß ISO 306 aufweist.

In weiterer Ausgestaltung ist vorgesehen, daß der Kunststoff einen Schmelzindex in dem Bereich von 20 - 25 g/10 min gemäß DIN 53735 aufweist. Insbesondere ist vorgesehen, daß der Kunststoff einen Schmelzindex von 23 g/10 min aufweist.

Es kann auch vorgesehen sein, daß der Kunststoff eine Zugfestigkeit im Bereich von 40-50 MPa gemäß DIN 53455 aufweist. Insbesondere ist vorgesehen, daß der Kunststoff eine Zugfestigkeit von etwa 43 Mpa aufweist.

In einer besonderen Ausgestaltung der Erfindung weist der Kunststoff eine Kerbschlagzähigkeit (Charpy) von 10 bis 20 kJ/m² bei 23°C auf. Insbesondere ist vorgesehen, daß der Kunststoff eine Kerbschlagzähigkeit (Charpy) von etwa 18 kJ/m² bei 23°C aufweist.

Als ein weiterer Vorteil der Erfindung kann auch vorgesehen sein, daß der Kunststoff eine Kerbschlagzähigkeit (Izod) von etwa 15 bis 25 kJ/m² bei 23°C aufweist. Insbesondere ist vorgesehen, daß der Kunststoff eine Kerbschlagzähigkeit (Izod) von etwa 22 kJ/m² bei 23 Grad Celsius aufweist.

Besonders vorteilhaft kann auch sein, daß der Kunststoff eine Kerbschlagzähigkeit (Charpy) von etwa 6 bis 10 kJ/m² bei -40°C aufweist.

Ein weiterer Vorteil der Erfindung ist, daß der Kunststoff eine Kerbschlagzähigkeit (Charpy) von etwa 8 kJ/m² bei -40°C aufweist.

Eine weitere, besondere Ausgestaltung der Erfindung kann darin bestehen, daß der Kunststoff eine Kerbschlagzähigkeit (Izod) von 8 bis 13 kJ/m² bei -40°C aufweist. In einer besonderen Ausgestaltung der Erfindung weist der Kunststoff eine Kerbschlagzähigkeit (Izod) von etwa 11 kJ/m² bei -40 Grad Celsius auf.

Es handelt sich bei den beschriebenen Kunststoffen um einen preiswerten Kunststoff, der in einem sehr großen Temperaturbereich, etwa zwischen - 30°C und +90°C, eine besonders geringe Spannungsrißbildung zeigt. Dies ist insbesondere von Wichtigkeit im Hinblick auf den Auswechselvorgang einer Filterzelle am Einsatzort, bei dem es auf Grund einer z.B. nur schwierig zugänglichen Einsatzöffnung für die Filterzelle dazu kommen kann, daß diese aus gewissen Höhen auf den Boden hinunterfällt. Die Verwendung von ABS verhindert, wie durch Versuchsreihen herausgefunden wurde, ein Zersplittern oder Zerbrechen eines erfindungsgemäßen Filterrahmens.

Außerdem besteht bei herkömmlichen Filterzellen die Gefahr, daß bei einem Auswechselvorgang, beispielsweise auch zu Reinigungszwecken, der Filterrahmen unsachgemäß, beispielsweise mit einem Schraubendreher, aus der Einsatzöffnung für die Filterzelle herausgehebelt wird. Durch die dabei auftretenden Hebelkräfte kann beim Stand der Technik der Rahmen ebenfalls zerstört werden.

Die gleiche Problematik tritt beim Einsetzen einer herkömmlichen Filterzelle in einer Einsatzöffnung auf, wenn von dem Benutzer große Kraft auf den Filterrahmen ausgeübt wird, weil sich die Filterzelle in der Einsatzöffnung beispielsweise leicht verkantet hat. All diese Nachteile werden durch die Verwendung des besonderen Kunststoffes verhindert.

ABS weist darüber hinaus besondere Vorteile hinsichtlich der verwendeten Presspassung auf.

Die Abschnittselemente 16 weisen vorteilhafterweise eine Länge L auf, die im wesentlichen der Seitenlänge a des Filters 11 entspricht. Wie sich insbesondere aus Fig. 1 ergibt, ist die Länge L des Abschnittselementes 16 lediglich um den zweifachen Betrag der Länge s der Seitenwand 29 des Verbindungselementes 17 kleiner als die Kantenlänge a des Filters 11. Auf diese Weise ist es möglich, bei einem Filter 11 quadratischer Grundform, wie er in Fig. 1 dargestellt ist, mit lediglich vier Abschnittselementen 16 und vier Verbindungselementen 17 einen im wesentlichen quadratischen vollständig umlaufenden Rahmen 15 zu konstruieren, wobei die Abschnittselemente eine maximale Länge aufweisen.

Sowohl Verbindungselement 17 wie auch die Abschnittselemente 16 sind aus ABS hergestellt. Die Verbindungselemente 17 sind dabei vorzugsweise als Spritzgußteile ausgebildet, wobei die deutlich größer dimensionierten und materialintensiveren Abschnittselemente 16 extrudiert sind und auf ihre Länge L lediglich abgelängt werden. Dies ermöglicht eine besonders preiswerte Herstellung eines erfindungsgemäßen Rahmens 15.

## Patentansprüche

1. Filterzelle (10) zur Luft- und Gasreinigung mit einem Filter (11), insbesondere mit einem Filter (11) im wesentlichen plattenförmiger Grundform, aus einem Filtermaterial wie Glasfaservlies od. dgl., und mit einem Rahmen (15), der das Filter (11) in Umfangsrichtung (U), insbesondere entlang dessen Schmalseiten (13a, 13b, 13c, 13d), umgibt, **dadurch gekennzeichnet, daß** der Rahmen (15) mehrere profilartig, langgestreckt ausgebildete und aus Kunststoff bestehende Abschnittselemente (16) umfasst, die im wesentlichen eine der jeweiligen Seitenlänge (a) des Filters (11) entsprechende Länge (L) aufweisen, und die mittels gesonderter Verbindungselemente (17) miteinander verbindbar sind.

2. Filterzelle nach Anspruch 1, **dadurch gekennzeichnet, daß** die Abschnittselemente (16) extrudiert sind.

3. Filterzelle nach Anspruch 1 oder 2, **dadurch gekennzeichnet, daß** die Abschnittselemente (16) lösbar aneinander befestigbar sind.

4. Filterzelle nach einem der vorangegangenen Ansprüche, **dadurch gekennzeichnet, daß** die Abschnittselemente (16) mit den Verbindungselementen (17) zusammensteckbar sind.

5. Filterzelle nach einem der vorangegangenen Ansprüche, **dadurch gekennzeichnet, daß** die Abschnittselemente (16) im Querschnitt im wesentlichen U-förmig ausgebildet sind.

6. Filterzelle nach einem der vorangegangenen Ansprüche, **dadurch gekennzeichnet, daß** in den Abschnittselementen (16) wenigstens eine Hohlkammer (23, 23a, 23b) angeordnet ist.

7. Filterzelle nach einem der vorangegangenen Ansprüche, **dadurch gekennzeichnet, daß** die Verbindungselemente (17) Steckzungen (27) aufweisen.

8. Filterzelle nach Anspruch 7, **dadurch gekennzeichnet, daß** in den Abschnittselementen (16) eine Mehrzahl von Hohlkammern (23, 23a, 23b) angeordnet ist, die voneinander durch Stege (24) getrennt sind.

9. Filterzelle nach einem der vorangegangenen Ansprüche, **dadurch gekennzeichnet, daß** die Abschnittselemente (16) und / oder die Verbindungselemente (17) aus ABS (Acrylnitril-Butadien-Styrol-Polymerisat) bestehen.

10. Filterzelle nach einem der vorangegangenen Ansprüche, **dadurch gekennzeichnet, daß** die Verbindungselemente (17) Spritzgußteile sind.

11. Filterzelle nach einem der vorangegangenen Ansprüche, **dadurch gekennzeichnet, daß** sie (10) kleberfrei ausgebildet ist.

12. Filterzelle nach einem der vorangegangenen Ansprüche, **dadurch gekennzeichnet, daß** die Verbindungselemente (17) und die Abschnittselemente (16) mittels Preßpassung miteinander verbunden sind.
